# EUROPEAN PATENT SPECIFICATION

(11) **EP 3 685 948 B1**
(45) Date of publication and mention of the grant of the patent: **23.08.2023**
(21) Application number: 20152570.6
(22) Date of filing: 18.01.2020
(51) Int. Cl.: B23K 9/09, B23K 9/095

(54) **SYSTEMS WITH INTEGRATED SWITCH FOR CONTROLLED SHORT CIRCUIT WELDING PROCESSES**
SYSTEME MIT INTEGRIERTEM SCHALTER FÜR GESTEUERTE KURZSCHLUSSSCHWEISSPROZESSE
SYSTÈMES DOTÉS D'UN COMMUTATEUR INTÉGRÉ POUR DES PROCESSUS COMMANDÉS DE SOUDAGE PAR COURT-CIRCUIT

(30) Priority: 24.01.2019 US 201962796342 P; 08.01.2020 US 202016737636
(43) Date of publication of application: 29.07.2020
(73) Proprietor: Illinois Tool Works, Inc., Glenview, Illinois 60025 (US)
(72) Inventor: HUTCHISON, Richard M, Illinois, 60025 (US); ANDERS, Adam E., Illinois, 60025 (US); BROCK, Maxwell B., Illinois, 60025 (US)
(74) Representative: HGF

(56) References cited:
- EP-A1- 1 666 183
- US-A1- 2016 368 075

## Description

### BACKGROUND

Welding is a process that has increasingly become ubiquitous in all industries. Conventional systems and methods for short circuit welding processes, such as welding, brazing, adhesive bonding, and/or other joining operations, require substantial investments in equipment, such as processing, displays, practice workpieces, welding tool(s), sensor(s), and/or other equipment.

Conventional short circuit gas metal arc welding (GMAW), also referred to as metal inert gas (MIG) welding, is a welding process in which an electric arc forms between an electrode and pieces of metal that are to be welded. The electric arc generates heat that causes the pieces of metal to melt. Upon cooling down of the melted pieces of metal, the pieces of metal join and form a weld. Electrical and/or physical parameters can be measured and the results of these measurements may be provided to the welder and/or to a control system and control circuit as process and system feedback during the welding operation. The welder and/or the control system and the control circuit may use this feedback information to adjust the welding parameters in real time while welding thus causing in an improvement in the welding process.

US2016/368075A1 discloses an arc welding control method of alternating feeding of a welding wire between forward feeding and reverse feeding periodically to generate a short-circuiting period and an arc period in a manner that shifting to the arc period is performed by reducing a welding current in the reverse feeding during the short-circuiting period.

While such processes may be automated in certain contexts, a large number of applications continue to exist for manual welding operations, the success of which relies heavily on the proper use of a welding gun or torch by a welding operator, sometimes referred to as the welder. For instance, improper torch angles (work and travel angles), contact tip-to-work distance, travel speed, and aim are parameters that may dictate the quality of a weld. Even experienced welders, however, often have difficulty monitoring and maintaining these parameters throughout welding processes. In this regard, the welder may benefit from systems and methods that provide control over the short circuit welding process thus resulting in improved quality of welding and improved weld joints.

### SUMMARY

The present invention is directed to systems for controlled short circuit welding processes, as set forth in the claims. In particular, the disclosed controlled short circuit welding systems and methods employ an integrated switch to provide an alternative current path for arc current between an electrode wire and a workpiece. The switch is configured to close to redirect all or part of the arc current through the alternative current path in response to one or more welding process parameters exceeding a first threshold value corresponding to a short clearance event or a short circuit event.

These and other advantages, aspects and novel features of the present disclosure, as well as details of an illustrated example thereof, will be more fully understood from the following description and drawings.

### DRAWINGS

FIG. 1 illustrates a welding-type system employing a controlled short circuit welding process, in accordance with aspects of this disclosure.
FIG. 2 is a block diagram of an example welding-type system in accordance with aspects of this disclosure.
FIG. 3 illustrates various phases of a short circuiting welding process, in accordance with aspects of this disclosure.
FIGS. 4A and 4B illustrate voltage and current characteristic profiles of a short circuiting welding process, respectively, in accordance with aspects of this disclosure.
FIGS. 5A and 5B illustrate voltage and current characteristic profiles of a short circuiting welding process prior to clearance of a short circuit event, respectively, in accordance with aspects of this disclosure.
FIGS. 6A and 6B illustrate voltage and current characteristic profiles of a short circuiting welding process prior to the onset of a short circuit event, respectively, in accordance with aspects of this disclosure.
FIG. 7 illustrates an example method for predicting a short-circuit event or detecting a short-circuit event, and then activating an integrated switch, in accordance with aspects of this disclosure
FIG. 8 illustrates an example method for predicting a short-circuit event and then activating the secondary switch, in accordance with aspects of this disclosure
FIG.9 illustrates an example method for detecting a short-circuiting event and then activating the secondary switch, in accordance with aspects of this disclosure

The figures are not necessarily to scale. Where appropriate, similar or identical reference numbers are used to refer to similar or identical components.

### DETAILED DESCRIPTION

The present disclosure is directed to systems and methods for controlled short circuit welding processes. In particular, the disclosed controlled short circuit welding systems and methods employ an integrated switch to provide an alternative current path for arc current between an electrode wire and a workpiece. The switch is configured to close to redirect all or part of the arc current through the alternative current path in response to one or more welding process parameters exceeding a first threshold value corresponding to a short clearance event.

For example, the amount of current flowing from the electrode wire to the workpiece at the time of a short circuit clearing event is directly related to the amount of spatter generated by that event. The spatter generated can be proportional to the magnitude of the current squared. Such spatter can create low-quality welds, and result in spatter affixing to surfaces surrounding the weld site, creating touch-up work for a welder.

While it is desirable to clear a short circuit at a low current level to limit the amount of spatter, it is also beneficial to utilize the effect of Joule heating on the electrode wire during the short circuit event. This type of heating can be particularly useful for higher deposition rate welding processes. However, if a high current is applied during the short circuit event to encourage heating, to avoid spatter the amount of current will have to be reduced quickly as the short circuit clears. The speed with which this process occurs become more pointed in a controlled short circuit welding process employing bi-directional wire feeders, which provide additional control of the welding process by advancing and retracting the electrode wire in a periodic manner.

Thus, to clear a short circuit with both low spatter and high deposition rates, an integrated or secondary switching device can be utilized to quickly reduce the current level in the short circuit prior to the clearing event. For example, when triggered, the integrated switch can close, thereby providing an alternative current pathway via an alternative or secondary circuit. The opening of this alternative current pathway quickly limits the amount of current flowing to the workpiece via the electrode wire. As a result, as the short circuit clears, and as the wire retracts from the workpiece, the current available for reigniting the arc is lower, thereby generating less spatter in an arc phase.

The switch can be triggered by one or more feedback variables corresponding to welding process parameters, or a function thereof. In some examples, the rate of change of one or more variables, such as voltage, power or impedance (e.g., and/or a derivative thereof), can be indicative of an imminent short circuit clearance event and/or an occurrence of a short circuit clearance event.

The switch can be turned off following clearance of the short circuit in response to different one or more feedback variables corresponding to welding process parameters, or a function thereof. In some examples, the switch can be turned off after a predetermined duration, for instance, in response to expiration of a timer (e.g., integrated with and/or monitored by a controller or other logic routine). The duration can be determined by the particular welding process and/or welding characteristics (e.g., weld sequence, wire/workpiece type, historical data, etc.), and/or set by an operator. Some examples include a measured voltage, power and/or a rate of change of current exceeding one or more threshold values. Such values can be determined through analysis of historical data, predetermined values, calculated thresholds, for example.

Additionally or alternatively, as the welding system begins entrance into an arc phase, it is desirable for the molten droplet to enter the weld puddle at a relatively low current level (in, for instance, a MIG welding process). For example, if the current level is too high, normal wetting action between the droplet and the puddle can be interrupted by a Lorentz "pinch" force at the droplet/puddle interface. This interruption of droplet transfer can result in large spatter droplets being expelled by the process, as described above.

To avoid this phenomenon and the resulting amount of spatter, the current can be reduced in an ultimate phase of the arc to a desired low level as the droplet enters the puddle. However, this then limits the amount of arc energy available to melt the wire, thereby limiting deposition rate.

An alternate process, which minimizes aborted transfer events, is to utilize the integrated switch and alternative current pathway to regulate the amount of current flowing through the wire. For instance, upon anticipation or detection of a short circuit event, the switch is activated and the welding current is quickly reduced to diminish the Lorentz force at the droplet puddle interface. This reduction allows the droplet to completely transfer to the puddle without excess spatter.

Anticipation of a short circuit event can be based upon one or more feedback variables corresponding to welding process parameters, or a function thereof. For example, a representative (i.e. average) duration of an arc can be calculated based upon a measured or calculated duration of N number of previous arc events. Additionally or alternatively, a measured voltage and/or impedance value exceeding one or more threshold values can correspond to an anticipated short circuit event. In some examples, the short circuit event occurrence can be determined by the voltage and/or a rate of change of current exceeding one or more threshold values.

Advantageously, the resulting welding operation experiences increased process stability, decreased spatter generation, even at higher deposition rates, and better adaptability to changing process variables, such as contact tip to work distance (CTWD), torch travel speed, torch angle, material thickness, joint configuration, among other benefits.

In disclosed examples, a welding-type system includes a welding-type power source configured to generate output power for an arc welding process. A bi-directional wire feeder to advance or retract an electrode wire to or from a workpiece. One or more sensors configured to measure one or more welding process parameters. A switch provides an alternative current path for arc current between an electrode wire and a workpiece. The switch is configured to close to redirect all or part of the arc current through the alternative current path in response to one or more welding process parameters exceeding a first threshold value corresponding to a short clearance event.

In some examples, the switch is configured to adjust the amount of the arc current flowing through the alternative current path to regulate a voltage level of the arc welding process. In examples, a controller to receive data corresponding to the one or more welding process parameters; compare the data to a plurality of threshold values associating welding process parameters to short clearance events; and determine an anticipated short circuit event or an occurrence of a short circuit event based on the one or more welding process parameters.

In accordance with the invention, a controller to generate control signals based on the one or more welding process parameters, wherein the switch is configured to receive the control signals from the controller and adjust the amount of the arc current flowing through the alternative current path based on the control signals. In examples, the one or more welding process parameters is a voltage measured between the welding electrode and the workpiece.

In some examples, the one or more welding process parameters is a rate of change of the arc current. In examples, the one or more welding process parameters is a power output from the welding-type power source. In some examples, the switch is a semiconductor-based device. In examples, the switch is a transistor device.

In examples, the switch is a passive switch configured to activate automatically to redirect the arc current through the alternative current path. In some examples, the switch is further configured to open adjust an amount of arc current flowing through the alternative current path prior to the short clearance event in response to one or more welding process parameters exceeding a second threshold value.

In some examples, the second threshold value is one of a rate of change of voltage, a rate of change of power, or a rate of change of impedance associated with the welding-type system. In examples, the second threshold value corresponds to a short circuit event.

In some disclosed examples, a welding-type system includes a welding-type power source configured to generate output power for an arc welding process. A bi-directional wire feeder to advance or retract an electrode wire to or from a workpiece. One or more sensors configured to measure one or more welding process parameters. A switch provides an alternative current path for arc current between an electrode wire and a workpiece. The switch is configured to close to redirect all or part of the arc current through the alternative current path in response to one or more welding process parameters exceeding a threshold value corresponding to a short circuit event.

In examples, the threshold value is a first threshold value corresponding to an anticipated short circuit event, the one or more welding process parameters including a voltage or an impedance associated with the arc welding process.

In some examples, the threshold value is a second threshold value corresponding to an anticipated short circuit event, the one or more welding process parameters including a measured arc event duration exceeding a representative duration of one or more arc events.

In examples, the threshold value is a third threshold value corresponding to a detected short circuit event, the one or more welding process parameters including a voltage or a rate of change of the arc current.

In some examples, a controller receives data corresponding to the one or more welding process parameters, compares the data to a plurality of threshold values associating welding process parameters to anticipated short circuit events or detected short circuit events, and identifies an anticipated short circuit event or an occurrence of a short circuit event based on the one or more welding process parameters.

In accordance with the invention, a controller generates control signals based on the one or more welding process parameters, wherein the switch is configured to fully or partially close to adjust the amount of the arc current flowing through the alternative current path based on the control signals. In some examples, the welding-type system is configured to perform additive manufacturing operations.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuit and other ancillary circuit associated therewith.

As used herein, the term "pulse welding" includes welding with output power that is generally pulsed, at a controllable frequency, between a greater peak and a lesser background, and pulse welding is performed in an arc state.

As used herein, the term "periodic" and/or "cyclical" welding process and/or output includes welding output that may be characterized as a series of periods and/or cycles, wherein each cycle may be the same, similar or different.

As used herein, the term "wire feeder" includes the motor or mechanism that drives the wire, the mounting for the wire, and controls related thereto, and associated hardware and software.

As used herein, the term "bi-directional wire feeder" includes the motor or mechanism that drives the wire, the mounting for the wire, and controls related thereto, and associated hardware and software, the bi-directional wire feeder being capable of both advancing and reversing the wire. The bi-directional wire feeder can be used during a periodic and/or a cyclical welding process

As used herein, the term "controller" or "control circuit" includes digital and/or analog circuit, discrete or integrated circuit, microprocessors, DSPs, FPGAs, etc., and/or software, hardware and firmware, located on one or more boards, used to control all or part of a welding-type system or a device such as a power supply, power source, engine or generator.

As used herein, a "circuit" or "circuit" includes any analog and/or digital components, power and/or control elements, such as a microprocessor, digital signal processor (DSP), software, and the like, discrete and/or integrated components, or portions and/or combinations thereof.

As used herein, the term "energy storage device" is any device that stores energy, such as, for example, a battery, a supercapacitor, etc.

As used herein, the term "memory" includes volatile and non-volatile memory, and can be arrays, databases, lists, etc.

As used herein, the term "torch" or "welding-type tool" can include a hand-held or robotic welding torch, gun, or other device used to create the welding arc.

As used herein, the term "welding mode" or "welding operation" is the type of process or output used, such as CC, CV, pulse, MIG, TIG, spray, short circuit, etc.

As used herein, the term "boost converter" is a converter used in a circuit that boosts a voltage. For example, a boost converter can be a type of step-up converter, such as a DC-to-DC power converter that steps up voltage while stepping down current from its input (e.g., from the energy storage device) to its output (e.g., a load and/or attached power bus). It is a type of switched mode power supply.

As used herein, the term "buck converter" (e.g., a step-down converter) refers to a power converter which steps down voltage (e.g., while stepping up current) from its input to its output.

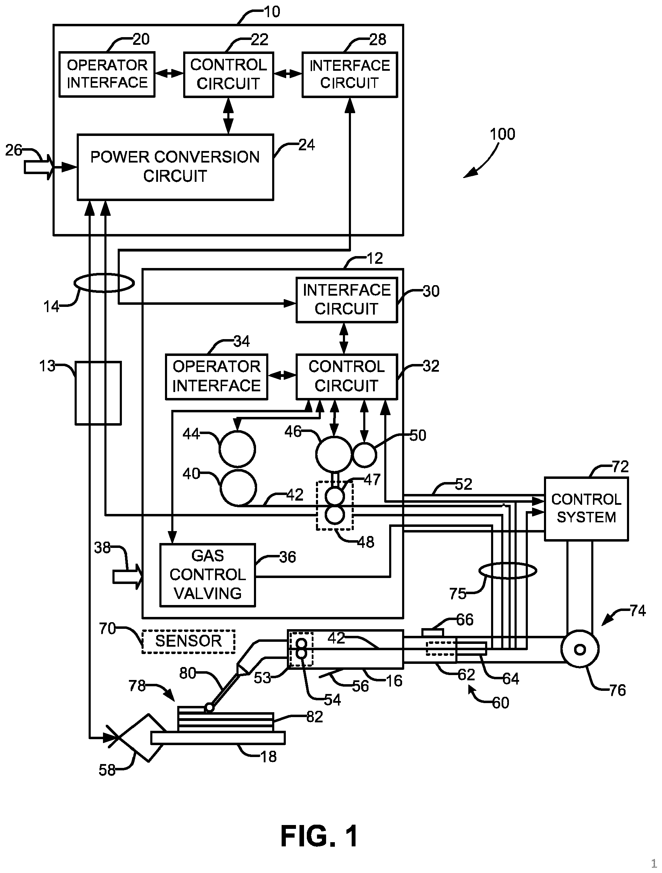

FIG. 1 illustrates an example arc welding-type system 100 for performing controlled short circuit (CSC) welding operations. As shown in the arc welding-type system of FIG. 1, a power supply 10 and a wire feeder 12 are coupled via conductors or conduits 14. In the illustrated example, the power supply 10 is separate from the wire feeder 12, such that the wire feeder may be positioned at some distance from the power supply near a welding location. However, in some examples the wire feeder may be integrated with the power supply 10. In such cases, the conduits 14 would be internal to the system. In examples in which the wire feeder 12 is separate from the power supply 10, terminals are typically provided on the power supply and on the wire feeder 12 to allow the conductors or conduits to be coupled to the systems so as to allow for power and gas to be provided to the wire feeder 12 from the power supply 10, and to allow data to be exchanged between the two devices.

The system 100 is configured to provide wire, power and shielding gas to a welding tool or welding torch 16. The tool 16 may be of many different types, and may allow for the feed of a welding wire 42 (e.g., an electrode wire) and gas to a location adjacent to a workpiece, substrate or platform 18. A second conductor is run to the welding workpiece so as to complete an electrical circuit between the power supply and the workpiece. In the context of additive manufacturing, the substrate 18 provides a foundation upon which a part 78 that includes layers 82 is to be formed by application of metal droplets 80.

As shown in FIG. 1, the disclosed controlled short circuit welding system 100 can employ an integrated switch 13 and/or associated circuit to provide an alternative current path for arc current between an electrode wire 42 and a workpiece 18. The switch 13 is configured to close to redirect all or part of the arc current through the alternative current path in response to one or more welding process parameters exceeding a first threshold value corresponding to a short clearance event. The switch 13 may be integrated with the tool 16, attached to the tool 16, and/or may be located at one or more locations within the system. The details of switch 13 and operation during one or more processes is described further below. An example switch for such an operation can be found in U.S. Patent Application 15/184,005, entitled "Welding System with Arc Control" filed on June 16, 2016, which is herein incorporated by reference in its entirety.

The welding system 100 is configured for data settings to be selected by the operator and/or a welding sequence, such as via an operator interface 20 provided on the power supply 10. The operator interface 20 will typically be incorporated into a front faceplate of the power supply 10, and may allow for selection of settings such as the weld process, the type of wire to be used, voltage and current settings, and so forth. In particular, the system is configured to allow for welding with various steels, aluminums, or other welding wire that is channeled through the tool 16. Further, the system is configured to employ welding wires with a variety of cross-sectional geometries (e.g., circular, substantially flat, triangular, etc.). These weld settings are communicated to a control circuit 22 within the power supply. The system may be particularly adapted to implement welding regimes configured for certain electrode types.

Additionally, or alternatively, process instructions for the welding operation can be provided via a weld sequence program, such as stored on a memory accessible to a processor/control circuit 22 associated with the power supply 10. In such a case, the sequencer can employ stored information (e.g., associated with a desired product configuration and/or process, including historical data), and/or customizable by a user. For instance, information associated with a particular design (e.g., thermal profiles associated with the part 78, material characteristics, system control parameters, etc.) corresponding to the part 78 can be stored in a memory and/or provided via a network interface. Thus, the information can be used to control operation of the system to facilitate formation of the part 78, such as by controlling a power output from the power supply 10, wire feeder motors 48, 54, etc.

The control circuit 22 operates to control generation of welding power output that is supplied to the welding wire 42 for carrying out the desired welding operation. In examples, the control circuit 22 may be adapted to regulate a MIG welding regime that promotes short circuit transfer of molten metal to the part 78, without adding excessive energy to the part 78 or the welding wire 42. In "short circuit" modes, droplets of molten material form on the welding wire 42 under the influence of heating by the welding arc, and these are periodically transferred to the part 78 by contact or short circuits between the welding wire 42 and droplets 80 and the part 78. Note that herein in this disclosure part 78 is sometimes referred to as workpiece or welding workpiece.

In this manner, the system and/or the control circuit 22 controls the welding of the part 78 by adjusting one or more operational characteristics of the system during the welding process. The operational characteristics may include, but are not limited to, wire feeder speed, wire feeder direction, travel speed, power output, process mode, deposition path, deposition sequence, torch angle, etc.

Additionally, a sensor(s) 70 can measure operational parameters associated with operation of the system (e.g., current, voltage, inductance, phase, impedance, power, inductance, speed, acceleration, orientation, position, etc.). The sensed operational characteristic (e.g., voltage, current, temperature, shape, speed, etc.) can be provided to the control circuit 22 or other controller (e.g., control circuit 32, a controller associated with the control system 72, etc.) to further control the welding process.

Power from the power supply is applied to the wire electrode 42, typically by a welding cable 52. Similarly, shielding gas is fed through the wire feeder and the welding cable 52. During welding operations, the welding wire 42 is advanced through a jacket of the welding cable 52 towards the tool 16. Within the tool 16, a second wire feeder motor 53 comprises rollers 54 may be provided with an associated drive roller, which can be regulated to provide the desired wire feed speed and/or direction.

A control system 72 can be employed to regulate, for example, movement and position of the tool 16 in accordance with the control circuits 22, 32, as well as information from sensor(s) 70. In examples, the control system 72 may be in communication with the power supply 10, the wire feeder 12 and/or the tool 16 via one or more cables 75. Thus, power and/or information can be provided and/or exchanged via cable 75 to control the welding process. In particular, the control system 72 can employ one or more arms 74 having one or more actuators 76 (e.g., servo motors, joints, etc.). In this way, the control system 72 can command fine control of the attached tool 16 in six degrees of freedom during the welding operation, including travel speed, tool location, distance from the part 78, etc. The control system 72 may include one or more sensors to sense operational characteristics, which can be communicated with the control circuits 22, 32 to further facilitate formation of the part 78.

In some examples, the control circuits 22, 32 may provide a signal to the wire feeder 12, the power supply 10, and or the control system 72 to enable the welding process to be started and stopped in accordance with a particular application or welding process. That is, upon initiation of the process, gas flow may begin, wire may advance, and power may be applied to the welding cable 52 and through the contact tip of the tool 16 to the advancing welding wire 42. A workpiece cable and clamp 58 allow for closing an electrical circuit from the power supply through the welding torch, the electrode (wire), and the part 78 for maintaining the welding arc during the operation.

The present arc welding system allows for control of successive voltage and/or current levels and/or pulse durations based on previous current and duration measurements so as to control the promotion, occurrence, duration, and interruption of short circuit events between the welding wire electrode and the advancing weld puddle. In particular, current peaks in waveforms are regulated based on one or more preceding short circuit events, or aspects of the short circuit events, such as its duration.

The control circuit 22 is coupled to power conversion circuit 24. This power conversion circuit 24 is adapted to create the output power, such as pulsed waveforms applied to the welding wire 42 at the tool 16. Various power conversion circuits may be employed, including choppers, boost circuit, buck circuit, inverters, converters, and so forth. The configuration of such circuit may be of types generally known in the art in and of itself. The power conversion circuit 24 is coupled to a source of electrical power as indicated by arrow 26. The power applied to the power conversion circuit 24 may originate in the power grid, although other sources of power may also be used, such as power generated by an engine-driven generator, batteries, fuel cells or other alternative sources. The power supply illustrated in FIG. 1 may also include an interface circuit 28 configured to allow the control circuit 22 to exchange signals with the wire feeder 12.

The wire feeder 12 may include a complementary interface circuit 30 that is coupled to the interface circuit 28. In some examples, multi-pin interfaces may be provided on both components and a multi-conductor cable run between the interface circuit to allow for such information as wire feed speeds, processes, selected currents, voltages or power levels, and so forth to be set on either the power supply 10, the wire feeder 12, or both.

The wire feeder 12 also may include control circuit 32 coupled to the interface circuit 30. As described below, the control circuit 32 allows for wire feed speeds to be controlled in accordance with operator selections or stored sequence instructions, and permits these settings to be fed back to the power supply via the interface circuit. The control circuit 32 is coupled to an operator interface 34 on the wire feeder that allows selection of one or more welding parameters, particularly wire feed speed. The operator interface may also allow for selection of such weld parameters as the process, the type of wire utilized, current, voltage or power settings, and so forth. The control circuit 32 may also be coupled to gas control valving 36 that regulates the flow of shielding gas to the torch. In general, such gas is provided at the time of welding, and may be turned on immediately preceding the weld and for a short time following the weld. The gas applied to the gas control valving 36 may be provided in the form of pressurized bottles, as represented by reference numeral 38.

The wire feeder 12 includes components for feeding wire to the welding tool 16 and thereby to the welding application, under the control of control circuit 32. For example, one or more spools of welding wire 40 are housed in the wire feeder. Welding wire 42 is unspooled from the spools and is progressively fed to the tool 16. The spool may be associated with a clutch 44 that disengages the spool when wire is to be fed to the tool. The clutch 44 may also be regulated to maintain a minimum friction level to avoid free spinning of the spool 40. The first wire feeder motor 46 may be provided within a housing 48 that engages with wire feed rollers 47 to push wire from the wire feeder 12 towards the tool 16.

In the example of FIG. 1, a moveable buffer 60 can include a first portion 62 and a second portion 64, where at least one of the first and second portions are configured to move relative the other portion in response to a change in the amount of welding wire 42 between a first wire feeder motor 46 and a second wire feeder motor 53. A sensor 66 (e.g., one or more sensors) is configured to sense relative movement or displacement between the first and second portions and provide sensor data to control circuit (e.g., control circuit 22, 32) to adjust a speed and/or direction of the welding wire 42 in response.

In practice, at least one of the rollers 47 is mechanically coupled to the motor and is rotated by the motor to drive the wire from the wire feeder, while the mating roller is biased towards the wire to maintain good contact between the two rollers and the wire. Some systems may include multiple rollers of this type. A tachometer 50 or other sensor may be provided for detecting the speed of the first wire feeder motor 46, the rollers 47, or any other associated component so as to provide an indication of the actual wire feed speed. Signals from the tachometer are fed back to the control circuit 32, such as for continued or periodic monitoring, calibration, etc. In some examples, the system includes a wire spool motor for rotating the wire feeding device, which can be similarly adjusted to increase or decrease the amount of wire between wire feeder motors.

In some examples, the wire feeder 12 can be configured to reverse the direction of the welding wire 42 (i.e. a bi-directional wire feeder). Moreover, although described as operating with two wire feeders and/or wire feeder motors (e.g., wire feeder motors 46 and 53), the system can operate with a single wire feeding unit to advance and/or reverse wire during welding operations (e.g., formation of a part 78). Additionally, or alternatively, in some examples, one wire feeder may be configured to advance the wire 42 while another wire feeder is configured to reverse the direction of the wire. In this example, one or more control circuit (e.g., control circuits 22, 32) coordinates operation of the two wire feeders to implement a CSC welding process in a welding system, as disclosed herein.

Other system arrangements and input schemes may also be implemented. For example, the welding wire may be fed from a bulk storage container (e.g., a drum) or from one or more spools outside of the wire feeder. Similarly, the wire may be fed from a "spool gun," in which the spool is mounted on or near the welding torch. As noted herein, the wire feed speed settings may be input via the operator input 34 on the wire feeder or on the operator interface 20 of the power supply, or both. In systems having wire feed speed adjustments on the welding torch, this may be the input used for the setting.

Although described with respect to an arc welding-type system, the disclosed system may be implemented in conjunction with a variety of technologies to conduct various types of welding processes.

Thus, as described with respect to FIG. 1, the welding-type system 100 can include a welding-type power source 10 configured to generate output power for an arc welding process, for example, to power one or more of the wire feeder 12, the robotic system 74, perform arc welding via tool 16, etc. The wire feeder 12 may be a bi-directional wire feeder configured to advance or retract the wire 42 to or from the workpiece 18. Sensors 70 measure one or more welding process parameters, and provide such measurements to a controller (e.g., control circuit 22, control circuit 32, control system 72, etc.), which commands operation of the switch 13 to provide an alternative current path for arc current between the wire 42 and the workpiece 18. The switch 13 is configured to close to redirect all or part of the arc current through the alternative current path, for instance, in response to one or more welding process parameters exceeding one or more threshold values corresponding to a short clearance event during a welding/additive manufacturing operation.

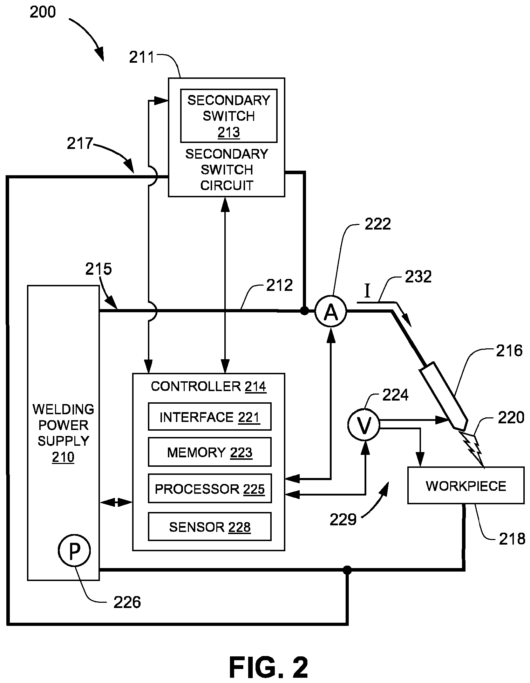

FIG. 2 depicts a block diagram of an example welding-type power system 200 in accordance with aspects of this disclosure. The system 200 comprises a welding power supply 210, a controller 214, a welding torch 216 and a workpiece and/or substrate 218. The welding arc 220 forms between the welding torch 216 and the workpiece 218. The system includes a cable(s) 212 which corresponds to a primary current path 215, and an integrated secondary switch circuit 211. In addition, the system includes a current sensor 222, a voltage sensor 224, a power sensor 226 and an impedance sensor 228. In some examples, one or more of the sensors 222, 224, 226 and 228 are located remote from controller 214 and/or the welding power supply 210. In alternative examples, one or more of the sensors 222, 224, 226 and 228 are integrated with the controller 214 and/or the welding power supply 210, or any combination of remote or integration, according to desired arrangement of the system 200.

Power is provided via cable(s) 212 along the primary current path 215, which is controlled by the controller 214 to direct current flow through the welding wire to the workpiece 218. A secondary switch 213 is located in the secondary switch circuit 211 situated in the secondary current path 217. This secondary current path 217 may be referred to as the alternative current path 217 or the alternate current path 217.

As shown in FIG. 2, the secondary switch 213 closes to redirect all or part of the arc current through the alternative current path 217 in response to one or more welding process parameters exceeding a first threshold value corresponding to a short clearance event, as determined by the controller 214.

For instance, the switch 213 adjusts the amount of the arc current flowing through the alternative current path 217 in response to commands from the controller 214 to regulate a voltage level or a current level of the arc welding process.

The controller 214 is connected to one or more components via an interface 221, including sensors 22, 224, 228, as well as primary circuit 212, secondary circuit 213, and/or tool 216 (i.e. via one or more cables 212), and can receive data corresponding to the one or more welding process parameters from one or more of these components.

The controller 214 compare the received data to a plurality of threshold values associating welding process parameters to short clearance events, which can be stored in a memory 223 and/or accessed remotely via interface 221. The controller 214 then determines an anticipated short circuit event or an occurrence of a short circuit event based on the one or more welding process parameters, for instance by analyzing the parameters via processor 225.

In response to falling outside a threshold value, the controller 214 is to generate control signals to command the switch 213 to adjust (e.g., fully or partially closing) to regulate the amount of the arc current flowing through the alternative current path 217, thereby modifying the amount of the arc current flowing through the primary current path 215.

In some examples, the welding process parameter is a voltage measured between the welding electrode and the workpiece, a rate of change of the arc current, a power output from the welding-type power source, etc. Further, the switch 213 can be a variety of switching devices, such as a semiconductor based device (e.g., a MOSFET), or a transistor device.

In some examples, the switch 213 is passively controlled, and will activate automatically in response to change in one or more of the process parameters (e.g., a sudden change in current, voltage, power, etc.) in order to redirect the arc current through the alternative current path 217.

In disclosed examples, the switch 213 opens to adjust an amount of arc current flowing through the alternative current path 217 prior to the short clearance event in response to one or more welding process parameters exceeding a second threshold value (e.g., a rate of change of voltage, a rate of change of power, or a rate of change of impedance) associated with the welding-type system. In some examples, the second threshold value corresponds to an anticipated and/or an occurrence of a short circuit event.

As shown in FIG. 2, current sensor 222 measures the value of the current 232 that flows to the welding torch 216. The voltage sensor 224 measures the voltage between the welding torch 216 and the workpiece 218. The controller 214 includes an impedance sensor 228 that determines the impedance of the load 229. The welding power supply 210 includes a power sensor 226, which measures the power being supplied by the welding power supply 226 to the system 200.

The welding-type system 200 includes a primary current pathway via cable 212 and a secondary switch 213. The cable 212 provides a primary path for the current 232 to flow from the welding power supply 210 to the welding torch 216. The secondary switch 213 provides an alternative current for arc current 232 between an electrode wire and a workpiece 218, wherein the secondary switch 213 is configured to activate to fully or partially open the alternative current path 217 in response to one or more welding process parameters exceeding a first threshold value corresponding to a short clearance event. The welding process parameters could, for example, include the exemplary current 232 measured by the current sensor 222, the voltage measured by the voltage sensor 224, the impedance of the load 229 measured or determined by impedance sensor 228 or the power supplied by the welding power supply measured by power sensor 226.

These welding process parameters are only a few examples of the many welding process parameters, which can be either measured or determined by the sensors or the various components of the system 200.In the welding-type system 200, the threshold value may be a second threshold value corresponding to an anticipated short circuit event, and the one or more welding process parameters may include a measured arc event duration exceeding an average duration or one or more arc events. The threshold value may be a third threshold value corresponding to a detected short circuit event and the one or more welding process parameters may include a voltage or a rate of change of the arc current. The threshold value may be a third threshold value corresponding to a detected short circuit event and the one or more welding process parameters may include a voltage or a rate of change of the arc current.

The welding-type system 200 may further comprise a controller 214 configured to receive data corresponding to the one or more welding process parameters. The controller 214 may compare the data to a plurality of threshold values associating welding process parameter to anticipated short circuit events or detected short circuit events, and the controller 214 may identify an anticipated short circuit event or an occurrence of a short circuit event based on the one or more welding process parameters. The welding-type system 200 may also be configured to perform additive manufacturing operations.

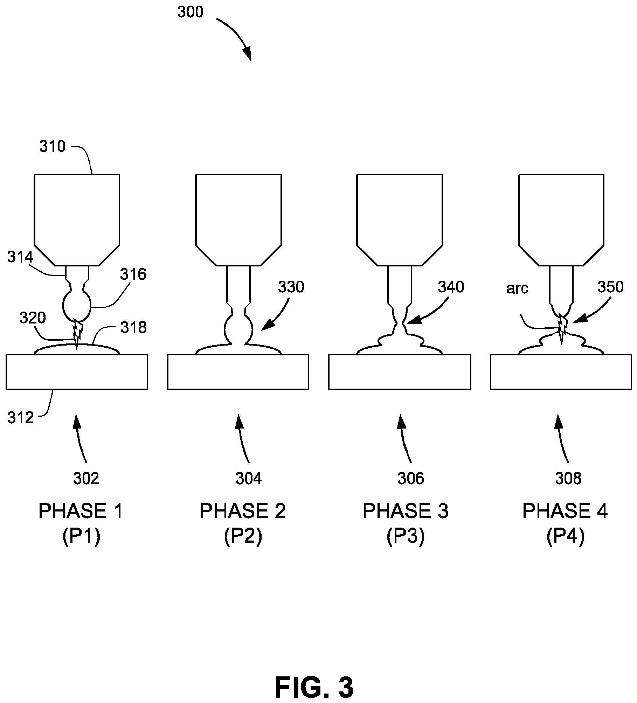

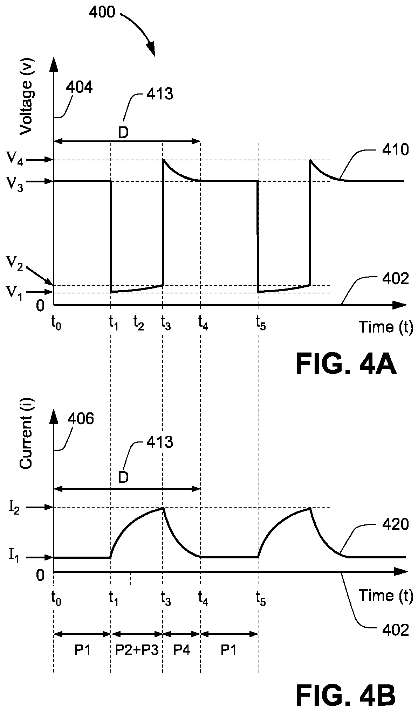

FIG. 3 illustrates the various phases of the short circuiting welding process 300, in accordance with aspects of this disclosure. The various phases of the short circuiting welding process 300 are indicated in FIG. 3 by the numerical indicator 320 for Phase 1, the numerical indicator 304 for Phase 2, the numerical indicator 306 for Phase 3 and the numerical indicator 308 for Phase 4. The Phases 1, 2, 3, and 4 are also indicated by P1, P2, P3 and P4 in FIG. 3 and FIGS. 4A and 4B. These four phases P1, P2, P3 and P4 are described in more detail, below.

In Phase 1 (P1) 302 in FIG. 3, the tip of the welding torch 310 is in close proximity to the workpiece 312. The wire 314 is sticking out from the tip of the welding torch 310 and an electric arc 320 is present between the molten droplet 316 that is formed at the tip of the wire 314 and the molten puddle 318 on the workpiece 312.

Referring to FIGS. 4A and 4B, Phase 1 (P1) starts at time t₀ and ends at time t₁. In the illustration of FIG. 4A the horizontal axis 402 indicates time (t) and the vertical axis 404 indicates voltage (V). In the illustration of FIG. 4B the horizontal axis 402 indicates time (t) and the vertical axis 406 indicates current (I). During the time interval of t₀ to t₁ (P1), the voltage is approximately constant at the value of V₃ while the current is approximately constant at the value of I₁.

As indicated in FIG. 3, the arc 320 is present and the tip of the wire 314 has formed into a molten droplet 316 that is not touching the molten puddle 318. However, as the arc 320 continues during the time duration of t₀ to t₁, the size of the molten droplet 316 increases. As the molten droplet 316 continues to grow in size it becomes heavier and is pulled down by the force of gravity. The molten droplet 316 is eventually pulled down to touch the molten puddle 318 as indicated by 330 of Phase 2 (P2).

Referring back to FIGS. 4A and 4B, at time t₁ (e.g. the beginning of Phase 2 (P2)), the voltage rapidly drops from approximately V₃ to V₁. The value of V₁ can be approximately zero in the exemplary case depicted in FIG. 4A. This is in response to a short circuit having formed between the wire 314 and the workpiece 312. Thus, current is flowing through this short circuit. As indicated in FIG. 4B, starting at time t₁ (e.g., the beginning of Phase 2 (P2)), the current increases from the value I₁ at time t₁ to the value of I₂ at time t₂. The time interval t₁ to t₃ covers the time duration associated with Phase 2 (P2) and Phase (P3). During this time interval from t₁ to t₃, the tip of the wire 314 is in contact with the molten puddle 318 of the workpiece 312 resulting in a short circuit. During the short circuit phase, the current increases from the current value of I₁ to I₂ from t₁ to t₃. During the period between t₁ to t₃, the voltage, as indicated in FIG. 4A, gradually increases from V₁ to V₂. This gradual increase of voltage from V₁ to V₂ is results from the gradual narrowing of metal that separates the tip of the wire 314 and the molten puddle 318 between time t₁ to t₃. A narrower current path, as indicated in the Phase 2 (P2) and Phase 3 (P3) diagrams for FIG. 3, results in a higher resistance, thus causing the voltage to increase from V₁ to V₂ during the time interval t₁ to t₃.

Phase 3 (P3) diagram of FIG. 3 shows, with numerical indicator 340, the contact just at the point prior to clearance of the short circuit, which occurs at time t₃. Once the short circuit clears, the arc 320 reignites between the tip of the wire 314 and the molten puddle 318. The clearance event and the restarting of the arc 320 is depicted in diagram of Phase 4 (P4) of FIG. 3 and is indicated by the numerical indicator 350. Once the short clears at time t₃, the voltage rapidly increased from the approximate value of V₂ to V₄ as indicated in FIG. 4A. It is possible that the value of V₄ is higher than V₃, due to an overshooting effect of the rapidly increasing voltage. However, the voltage decreases from value V₄ to the commanded value V₃ during the time interval of t₃ to t₄.

Time t₃ indicates the beginning of Phase 4 (P4) of process 300, and time t₄ indicates the conclusion of Phase 4 (P4). During the period between t₃ to t₄, the current decreases from I₂ to I₁ as indicated in FIG. 4B. The period between t₀ to t₄ may be construed as one cycle of the periodic process 300. This one cycle is indicated by the letter "D" and the numerical indicator 413 in FIGS. 4A and 4B. At the conclusion of the cycle D, which is at time t₄, the cycle D repeats itself. The voltage profile 410 depicted in FIG. 4A and the current profile 420 depicted in FIG. 4B, form a periodic series of arc events and short circuit events throughout the various phases of Phase 1 (P1), Phase (P2), Phase (P3) and Phase (P4) as illustrated in FIG. 3 and FIGS. 4A and 4B.

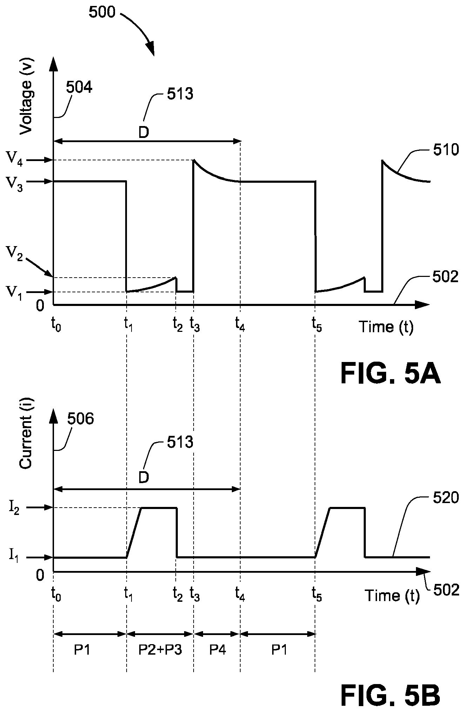

Referring to FIGS. 5A and 5B, shown are voltage waveform 510 and current waveform 520, respectively, as the system responds to actuation of the switch 213 prior to clearance of a short circuit event.

As shown in the illustration of FIG. 5A, during the time interval between t₀ to t₁ (P1), the voltage 510 is approximately constant at the value of V₃ while the current is approximately constant at the value of I₁. At time t₁ (e.g. the beginning of Phase 2 (P2)), the voltage rapidly drops from approximately V₃ to V₁ in response to a short circuit. The time interval t₁ to t₃ covers the time duration associated with Phase 2 (P2) and Phase (P3). For example, during this time interval from t₁ to t₃, the tip of the wire 314 is in contact with the molten puddle 318 of the workpiece 312 resulting in a short circuit.

During the short circuit phase following onset of the short circuit event, the current increases from the current value of I₁ to I₂ from the period t₁ to t₂ in order to generate Joule heating in the electrode wire during the short circuit. During the period between t₁ to t₂, the voltage, as indicated in FIG. 5A, gradually increases from V₁ to V₂ as a result from the gradual narrowing of metal that separates the tip of the wire 314 and the molten puddle 318.

In response to an indication from process feedback parameters that a short circuit is about to clear, the switch 213 is activated, closing the circuit for the alternative current path, as shown at t₂. For example, the process feedback parameters may represent an estimated or anticipated short circuit clearance event. In response, the current increases decreases at t₂ in order to limit the amount of current during the short clearance event, as indicated by the rise of voltage at t₃. The drop in current thereby limits the amount of spatter that would result from a high-current short clearance event.

Once the short clears at time t₃, the voltage rapidly increases from the approximate value of V₁ to V₄ as indicated in FIG. 5A. It is possible that the value of V₄ is higher than V₃, due to an overshooting effect of the rapidly increasing voltage. However, the voltage decreases from value V₄ to the commanded value V₃ during the time interval of t₃ to t₄.

The period between t₀ to t₄ may be construed as one cycle of the periodic process 300. This one cycle is indicated by the letter "D" and the numerical indicator 513 in FIGS. 5A and 5B. At the conclusion of the cycle D, which is at time t₄, the cycle D repeats itself. The voltage profile 510 depicted in FIG. 5A and the current profile 520 depicted in FIG. 5B, form a periodic series of arc events and short circuit events throughout the various phases of Phase 1 (P1), Phase (P2), Phase (P3) and Phase (P4) as illustrated in FIG. 3 and FIGS. 5A and 5B.

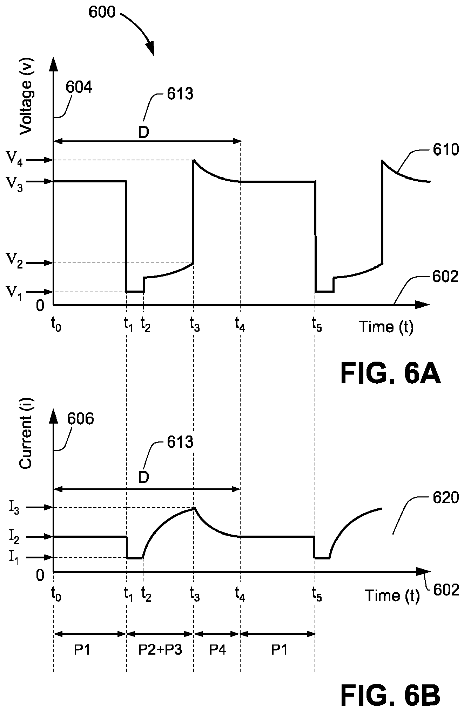

Referring to FIGS. 6A and 6B, shown are voltage waveform 610 and current waveform 620, respectively, as the system responds to actuation of the switch prior to or at the onset of a short circuit event.

As shown in the illustration of FIG. 6A, during the time interval between t₀ to t₁ (P1), the voltage 610 is approximately constant at the value of V₃ while the current is approximately constant at the value of I₂. At time t₁ (e.g. the beginning of Phase 2 (P2)), the voltage rapidly drops from approximately V₃ to V₁ in response to a short circuit. The time interval t₁ to t₃ covers the time duration associated with Phase 2 (P2) and Phase (P3). For example, during this time interval from t₁ to t₃, the tip of the wire 314 is in contact with the molten puddle 318 of the workpiece 312 resulting in a short circuit.

At the onset of the short circuit as determined by one or more feedback parameters, the switch is activated to divert current from the electrode wire, thereby decreasing the current flowing through the wire from the value I₂ to I₁. Thus, at the onset of the short circuit event, the level of current flowing through the electrode wire is relatively low, reducing the amount of spatter generated.

During the short circuit phase, the switch can be de-activated to allow current once again to flow through the wire, thereby increasing the current value from I₁ to I₃ during the period t₁ to t₂ in order to generate Joule heating during the short circuit. During the period between t₁ to t₂, the voltage, as indicated in FIG. 6A, gradually increases from V₁ to V₂ as a result from the gradual narrowing of metal that separates the tip of the wire 314 and the molten puddle 318.

Once the short clears at time t₃, the voltage rapidly increases from the approximate value of V₁ to V₄ as indicated in FIG. 6A. It is possible that the value of V₄ is higher than V₃, due to an overshooting effect of the rapidly increasing voltage. However, the voltage decreases from value V₄ to the commanded value V₃ during the time interval of t₃ to t₄.

The period between t₀ to t₄ may be construed as one cycle of the periodic process 300. This one cycle is indicated by the letter "D" and the numerical indicator 613 in FIGS. 6A and 6B. At the conclusion of the cycle D, which is at time t₄, the cycle D repeats itself. The voltage profile 610 depicted in FIG. 6A and the current profile 620 depicted in FIG. 6B, form a periodic series of arc events and short circuit events throughout the various phases of Phase 1 (P1), Phase (P2), Phase (P3) and Phase (P4) as illustrated in FIG. 3 and FIGS. 6A and 6B.

Although disclosed as separate process routines, the control waveforms illustrated in FIGS. 5A and 5B can be implemented jointly with the waveforms illustrated in FIGS. 6A and 6B. For example, at the onset or anticipation of a short circuit event, the current level may decrease to allow for the electrode wire to contact the weld puddle at a low-current level, as disclosed with respect to FIG. 6B. Once the short circuit is established, the current can increase to promote Joule heating in the electrode wire, as disclosed with respect to FIGS. 5B and 6B. At clearance or estimated clearance of the short circuit, the current level can again decrease, as shown in FIG. 5B, to allow the electrode wire to break contact with the weld at a low-current level, to avoid a violent clearance event and associated spatter.

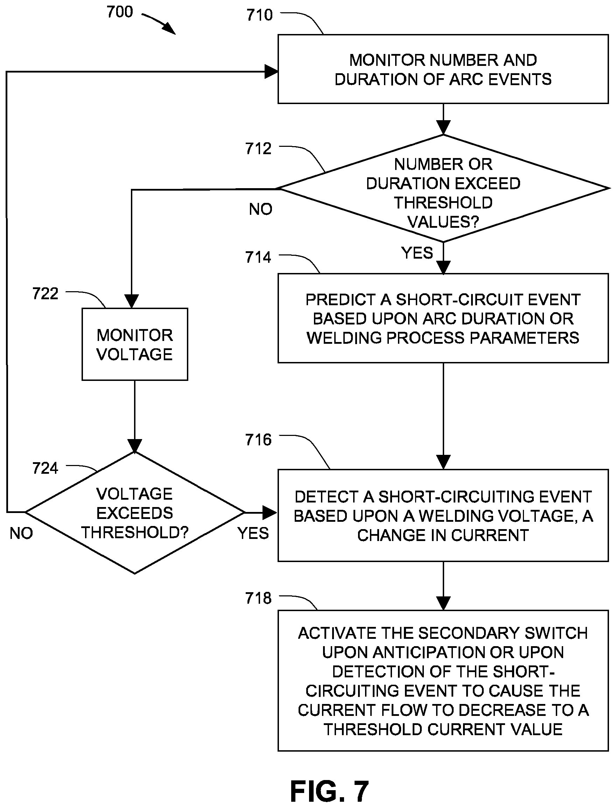

FIG. 7 illustrates an example of a method 700 for predicting a short-circuit event or detecting a short-circuit event and then activating the secondary switch 213 of FIG. 2, in accordance with aspects of this disclosure. The process 700 starts with the controller 214, depicted in FIG. 2, monitoring the number and the duration of the arc events (block 710). The controller 214 performs the monitoring and the control functions related to the method 700. However, it is possible that in some examples part or all of the monitoring process will be performed by the secondary switch circuit 211 and/or the secondary switch 213.

The controller 214 determines whether or not the number of arc events, or the duration of arc events, exceed threshold values (block 712). If the controller 214 determines, at step 712, that the number of arc events or the duration of arc events exceeds one or more threshold values, then the controller 214 moves to step 714. The controller predicts a short-circuit event based upon an arc duration exceeding an average duration of last N arc events or as a function of one or more of the welding process parameters (block 712). The controller 214 then proceeds to step 716 to detect a short-circuiting event based upon a welding voltage exceeding a threshold voltage value, or a rate of change of the current exceeding a threshold current rate of change value (block 716). The current rate of change may, in some examples, be determined using the calculation di/dt.

At step 712 of the method 700, the controller 214 may determine that the number or duration of the arc events does not exceed threshold values. In the case that the number or duration of the arc events does not exceed threshold values, the controller 214 proceeds to monitor the voltage (block 722). If the controller 214, at step 724, determines that the voltage exceeds threshold value (block 724) the controller proceeds to step 716 in order to commence the step of detecting a short-circuiting event based upon a welding voltage exceeding a threshold voltage value, or a rate of change of current exceeding a threshold current rate of change value (block 716). However, if at step 724, the controller 214 determines that the voltage does not exceed a threshold value, then the controller loops back to step 710 and monitors the number and the duration of arc events (block 710). Following the step 716, the controller 214 proceeds to step 718 and activates the secondary switch 213 upon anticipation or upon detection of the short-circuiting event to cause the current flow to decrease to a threshold current value.

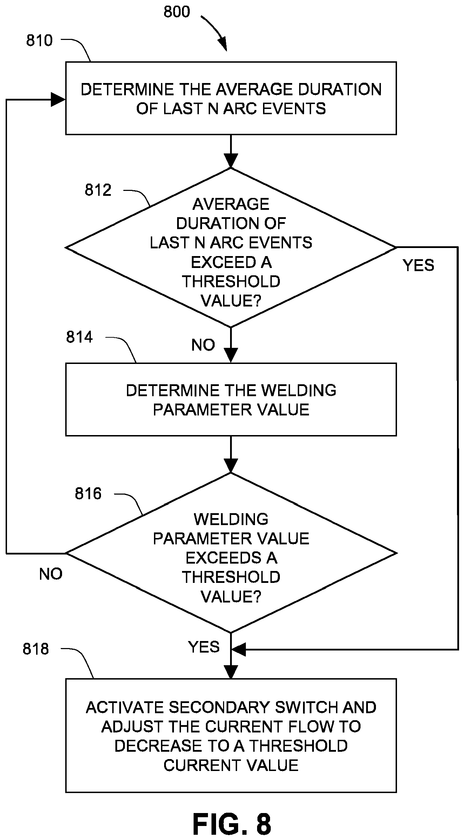

FIG. 8 illustrates an example of a method 800 for predicting a short-circuit event and then activating the secondary switch 213, in accordance with aspects of this disclosure. The controller 214 determines the average duration of the last N arc events (block 810). The controller 214 then proceeds to determine whether the average duration of the last N arc events exceeds a threshold value (block 812). If at step 812, the controller 214 determines that the average duration of the last N arc events does exceed a threshold value, then the controller proceeds to step 818 and activates the secondary switch 213 to control the current to decrease to a threshold current value. However, if at step 812, the controller 214 determines that the average duration of the last N arc events does not exceed a threshold value, then the controller 214 proceeds to step 814 to determine the welding parameter value (block 814).

At step 816, the controller 214 determines whether the welding parameter value exceeds a threshold value (block 816). If the controller 214 determines, at step 816, that the welding parameter value does not exceed a threshold value, then the controller 214 loops back to step 810 to determine the average duration of the last N arc events. However, if at step 816, the controller 214 does determine that the welding parameter value exceeds a threshold value, then the controller proceeds to step 818 and activates the secondary switch 213 and the controller 214 adjusts the current flow to decrease to a threshold current value (block 818).

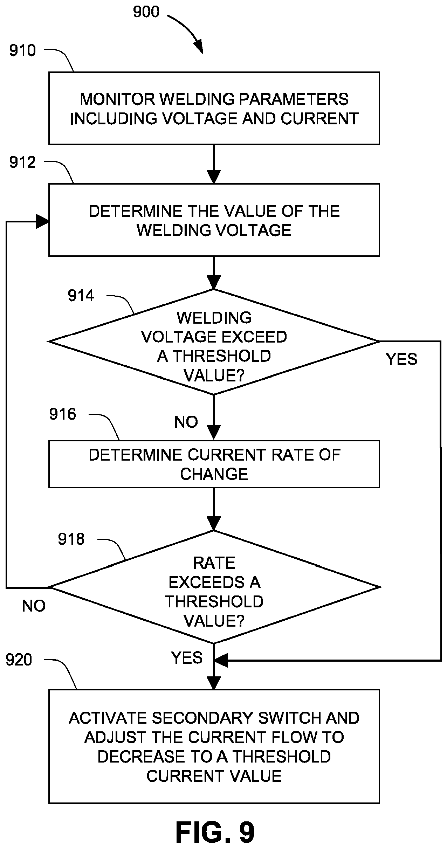

FIG. 9 illustrates an example of a method 900 for detecting a short-circuiting event and then activating the secondary switch 213, in accordance with aspects of this disclosure. The controller 214, in block 910, monitors the welding parameters including voltage and current (block 910). The controller 214, then proceeds to determine the value of the welding voltage (block 912). If at step 912, the controller 214 determines that the welding voltage exceeds a threshold value (block 914) then the controller 214 proceeds to step 920 to activate the secondary switch 213 and adjust the current flow to decrease to a threshold current value. However, if at step 914, the controller 214 determines that the voltage does not exceed a threshold value, then the controller proceeds to step 916 to determine whether the ratio di/dt exceeds a threshold value (block 918). If at step 918, the controller 214 determines that the ratio di/dt does not exceed a threshold value then the controller 214 loops back to step 912 to determine the value of the welding voltage. However, if at step 918, the controller 214 determines that the ratio di/dt exceeds a threshold value then the controller 214 activates the secondary switch 213 and adjusts the current flow to decrease to a threshold current value.

As described herein, the systems and methods provide improved arc starts, especially at with high amperage electrodes, and offers advantages for short clearing while welding. Moreover, employing the integrated energy storage device to augment power output of the system is a cost effective solution to improved arc starts on an engine drive.

The present methods and systems may be realized in hardware, software, and/or a combination of hardware and software. Example implementations include an application specific integrated circuit and/or a programmable control circuit.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

## Claims

1. A welding-type system (100), comprising:
a welding-type power source (10) configured to generate output power for an arc welding process;
a bi-directional wire feeder (12) to advance or retract an electrode wire (42) to or from a workpiece (18);
one or more sensors (70) configured to measure one or more welding process parameters; and
a controller (214) to generate control signals based on the one or more welding process parameters; **characterized by**:
a switch (13) to provide an alternative current path for arc current between an electrode wire and a workpiece, wherein the switch (13) is configured to close to redirect all or part of the arc current through the alternative current path in response to one or more welding process parameters exceeding a first threshold value corresponding t₀ a short clearance event,
wherein the switch (13) is configured to fully or partially close to adjust the amount of the arc current flowing through the alternative current path based on the control signals.

2. The welding-type system (100) of claim 1, wherein the switch (13) is configured to adjust the amount of the arc current flowing through the alternative current path to regulate a voltage level or a current level of the arc welding process.

3. The welding-type system (100) of claim 1, wherein the controller (214) is further configured to:
receive data corresponding to the one or more welding process parameters;
compare the data to a plurality of threshold values associating welding process parameters to short clearance events; and
determine an anticipated short circuit event or an occurrence of a short circuit event based on the one or more welding process parameters.

4. The welding-type system (100) of claim 3, wherein the switch (13) is configured to receive the control signals from the controller.

5. The welding-type system (100) of claim 1, wherein the one or more welding process parameters is a voltage measured between the welding electrode (42) and the workpiece (18).

6. The welding-type system (100) of claim 1, wherein the one or more welding process parameters is a rate of change of the arc current.

7. The welding-type system (100) of claim 1, wherein the one or more welding process parameters is a power output from the welding-type power source (10).

8. The welding-type system (100) of claim 1, wherein the switch (13) is a semiconductor based device.

9. The welding-type system (100) of claim 1, wherein the switch (13) is a transistor device.

10. The welding-type system (100) of claim 1, wherein the switch (13) is a passive switch configured to activate automatically to redirect the arc current through the alternative current path.

11. The welding-type system (100) of claim 1, wherein the switch (13) is further configured to adjust an amount of arc current flowing through the alternative current path prior to the short clearance event in response to one or more welding process parameters exceeding a second threshold value.

12. The welding-type system (100) of claim 11, wherein the second threshold value is one of a rate of change of voltage, a rate of change of power, or a rate of change of impedance associated with the welding-type system.

13. The welding-type system of claim 12, wherein the second threshold value corresponds to a short circuit event.

14. A welding-type system (100), comprising:
a welding-type power source (10) configured to generate output power for an arc welding process;
a bi-directional wire feeder (12) to advance or retract an electrode wire (42) to or from a workpiece (18);
one or more sensors (70) configured to measure one or more welding process parameters; and
a controller (214) to generate control signals based on the one or more welding process parameters, **characterized by**:
a switch (13) to provide an alternative current path for arc current between an electrode wire and a workpiece, wherein the switch (13) is configured to close to redirect all or part of the arc current through the alternative current path in response to one or more welding process parameters exceeding a threshold value corresponding to a short circuit event,
wherein the switch (13) is configured to fully or partially close to adjust the amount of the arc current flowing through the alternative current path based on the control signals.

15. The welding-type system (100) of claim 14, wherein the threshold value is a first threshold value corresponding to an anticipated short circuit event, the one or more welding process parameters including a voltage or an impedance associated with the arc welding process.

16. The welding-type system (100) of claim 14, wherein the threshold value is a second threshold value corresponding to an anticipated short circuit event, the one or more welding process parameters including a measured arc event duration exceeding a representative duration of one or more arc events.

17. The welding-type system (100) of claim 14, wherein the threshold value is a third threshold value corresponding to a detected short circuit event, the one or more welding process parameters including a voltage or a rate of change of the arc current.

18. The welding-type system (100) of claim 14, wherein the controller (214) is further configured to:
receive data corresponding to the one or more welding process parameters;
compare the data to a plurality of threshold values associating welding process parameters to anticipated short circuit events or detected short circuit events; and
identify an anticipated short circuit event or an occurrence of a short circuit event based on the one or more welding process parameters.

19. The welding-type system (100) of claim 14, wherein the welding-type system (100) is configured to perform additive manufacturing operations.

## Patentansprüche

1. Schweißsystem (100), aufweisend:
eine Schweißstromquelle (10), die konfiguriert ist, Ausgangsleistung für einen Lichtbogenschweißprozess zu erzeugen;
einen bidirektionalen Drahtvorschub (12) zum Vorschieben oder Zurückziehen eines Elektrodendrahts (42) hin zu oder weg von einem Werkstück (18);
einen oder mehrere Sensoren (70), die konfiguriert sind, einen oder mehrere Schweißprozessparameter zu messen; und
eine Steuerung (214) zum Erzeugen von Steuersignalen basierend auf dem einen oder den mehreren Schweißprozessparametern; **gekennzeichnet durch**:
einen Schalter (13) zum Bereitstellen eines alternativen Strompfads für Lichtbogenstrom zwischen einem Elektrodendraht und einem Werkstück, wobei der Schalter (13) konfiguriert ist, als Reaktion darauf, dass ein oder mehrere Schweißprozessparameter einen ersten Schwellenwert überschreiten, der einem Kurzschlussbehebungsereignis entspricht, zu schließen, um den gesamten oder einen Teil des Lichtbogenstroms durch den alternativen Strompfad umzuleiten,
wobei der Schalter (13) so konfiguriert ist, dass er vollständig oder teilweise schließt, um die Menge des Lichtbogenstroms, der durch den alternativen Strompfad fließt, basierend auf den Steuersignalen anzupassen.

2. Schweißsystem (100) nach Anspruch 1, wobei der Schalter (13) konfiguriert ist, die Menge des Lichtbogenstroms, der durch den alternativen Strompfad fließt, anzupassen, um einen Spannungspegel oder einen Strompegel des Lichtbogenschweißprozesses zu regeln.

3. Schweißsystem (100) nach Anspruch 1, wobei die Steuerung (214) ferner konfiguriert ist zum:
Empfangen von Daten, die dem einen oder den mehreren Schweißprozessparametern entsprechen;
Vergleichen der Daten mit einer Vielzahl von Schwellenwerten, die Schweißprozessparameter mit Kurzschlussbehebungsereignissen verknüpfen; und
Ermitteln eines erwarteten Kurzschlussereignisses oder eines Auftretens eines Kurzschlussereignisses basierend auf dem einen oder den mehreren Schweißprozessparametern.

4. Schweißsystem (100) nach Anspruch 3, wobei der Schalter (13) konfiguriert ist, die Steuersignale von der Steuerung zu empfangen.

5. Schweißsystem (100) nach Anspruch 1, wobei der eine oder die mehreren Schweißprozessparametern eine zwischen der Schweißelektrode (42) und dem Werkstück (18) gemessene Spannung sind.

6. Schweißsystem (100) nach Anspruch 1, wobei der eine oder die mehreren Schweißprozessparametern eine Änderungsrate des Lichtbogenstroms sind.

7. Schweißsystem (100) nach Anspruch 1, wobei der eine oder die mehreren Schweißprozessparametern eine von der Schweißstromquelle (10) ausgegebene Leistung sind.

8. Schweißsystem (100) nach Anspruch 1, wobei der Schalter (13) eine Vorrichtung auf Halbleiterbasis ist.

9. Schweißsystem (100) nach Anspruch 1, wobei der Schalter (13) eine Transistorvorrichtung ist.

10. Schweißsystem (100) nach Anspruch 1, wobei der Schalter (13) ein passiver Schalter ist, der konfiguriert ist, automatisch auszulösen, um den Lichtbogenstrom durch den alternativen Strompfad umzuleiten.

11. Schweißsystem (100) nach Anspruch 1, wobei der Schalter (13) ferner konfiguriert ist, eine Menge des Lichtbogenstroms, der vor dem Kurzschlussbehebungsereignis durch den alternativen Strompfad fließt, als Reaktion darauf, dass ein oder mehrere Schweißprozessparameter einen zweiten Schwellenwert überschreiten, anzupassen.

12. Schweißsystem (100) nach Anspruch 11, wobei der zweite Schwellenwert eines von einer Änderungsrate der Spannung, einer Änderungsrate der Leistung oder einer Änderungsrate der mit dem Schweißsystem verknüpften Impedanz ist.

13. Schweißsystem nach Anspruch 12, wobei der zweite Schwellenwert einem Kurzschlussereignis entspricht.

14. Schweißsystem (100), aufweisend:
eine Schweißstromquelle (10), die konfiguriert ist, Ausgangsleistung für einen Lichtbogenschweißprozess zu erzeugen;
einen bidirektionalen Drahtvorschub (12) zum Vorschieben oder Zurückziehen eines Elektrodendrahts (42) hin zu oder weg von einem Werkstück (18);
einen oder mehrere Sensoren (70), die konfiguriert sind, einen oder mehrere Schweißprozessparameter zu messen; und
eine Steuerung (214) zum Erzeugen von Steuersignalen basierend auf dem einen oder den mehreren Schweißprozessparametern, **gekennzeichnet durch**:
einen Schalter (13) zum Bereitstellen eines alternativen Strompfads für Lichtbogenstrom zwischen einem Elektrodendraht und einem Werkstück, wobei der Schalter (13) konfiguriert ist, als Reaktion darauf, dass ein oder mehrere Schweißprozessparameter einen Schwellenwert überschreiten, der einem Kurzschlussereignis entspricht, zu schließen, um den gesamten oder einen Teil des Lichtbogenstroms durch den alternativen Strompfad umzuleiten, wobei der Schalter (13) so konfiguriert ist, dass er vollständig oder teilweise schließt, um die Menge des Lichtbogenstroms, der durch den alternativen Strompfad fließt, basierend auf den Steuersignalen anzupassen.

15. Schweißsystem (100) nach Anspruch 14, wobei der Schwellenwert ein erster Schwellenwert ist, der einem erwarteten Kurzschlussereignis entspricht, wobei der eine oder die mehreren Schweißprozessparameter eine Spannung oder eine mit dem Lichtbogenschweißprozess verknüpfte Impedanz beinhalten.

16. Schweißsystem (100) nach Anspruch 14, wobei der Schwellenwert ein zweiter Schwellenwert ist, der einem erwarteten Kurzschlussereignis entspricht, wobei der eine oder die mehreren Schweißprozessparameter beinhalten, dass eine gemessene Dauer eines Lichtbogenereignisses eine repräsentative Dauer eines oder mehrerer Lichtbogenereignisse übersteigt.

17. Schweißsystem (100) nach Anspruch 14, wobei der Schwellenwert ein dritter Schwellenwert ist, der einem erkannten Kurzschlussereignis entspricht, wobei der eine oder die mehreren Schweißprozessparameter eine Spannung oder eine Änderungsrate des Lichtbogenstroms beinhalten.

18. Schweißsystem (100) nach Anspruch 14, wobei die Steuerung (214) ferner konfiguriert ist zum:
Empfangen von Daten, die dem einen oder den mehreren Schweißprozessparametern entsprechen;
Vergleichen der Daten mit einer Vielzahl von Schwellenwerten, die Schweißprozessparameter mit erwarteten Kurzschlussereignissen oder erkannten Kurzschlussereignissen verknüpfen; und
Identifizieren eines erwarteten Kurzschlussereignisses oder eines Auftretens eines Kurzschlussereignisses basierend auf dem einen oder den mehreren Schweißprozessparametern.

19. Schweißsystem (100) nach Anspruch 14, wobei das Schweißsystem (100) konfiguriert ist, Abläufe additiver Fertigung durchzuführen.

## Revendications

1. Système de type soudage (100) comprenant :
une source d'alimentation de type soudage (10) configurée pour générer une puissance de sortie pour un processus de soudage à l'arc ;
un dispositif d'alimentation en fil bidirectionnel (12) pour faire avancer ou rétracter un fil d'électrode (42) jusqu'à ou à partir d'une pièce à usiner (18) ;
un ou plusieurs capteurs (70) configurés pour mesurer un ou plusieurs paramètres de processus de soudage ; et
un dispositif de commande (214) pour générer des signaux de commande sur base du ou des paramètres de processus de soudage ; **caractérisé par** :
un commutateur (13) pour fournir un trajet de courant alternatif pour un courant d'arc entre un fil d'électrode et une pièce à usiner, dans lequel le commutateur (13) est configuré pour se fermer pour rediriger l'entièreté ou une partie du courant d'arc à travers le trajet de courant alternatif en réponse à un ou plusieurs paramètres de processus de soudage dépassant une première valeur seuil correspondant à un événement de dégagement court
dans lequel le commutateur (13) est configuré pour se fermer complètement ou partiellement pour ajuster la quantité du courant d'arc circulant à travers le trajet de courant alternatif sur base des signaux de commande.

2. Système de type soudage (100) selon la revendication 1, dans lequel le commutateur (13) est configuré pour ajuster la quantité de courant d'arc circulant à travers le trajet de courant alternatif pour réguler un niveau de tension ou un niveau de courant du processus de soudage à l'arc.

3. Système de type soudage (100) selon la revendication 1, dans lequel le dispositif de commande (214) est en outre configuré pour :
recevoir des données correspondant au ou aux paramètres de processus de soudage ;
comparer les données à une pluralité de valeurs seuil associant des paramètres de processus de soudage à des événements de dégagement court ; et
déterminer un événement de court-circuit anticipé ou une occurrence d'un événement de court-circuit sur base du ou des paramètres de processus de soudage.

4. Système de type soudage (100) selon la revendication 3, dans lequel le commutateur (13) est configuré pour recevoir les signaux de commande à partir du dispositif de commande.

5. Système de type soudage (100) selon la revendication 1, dans lequel le ou les paramètres de processus de soudage sont une tension mesurée entre l'électrode de soudage (42) et la pièce à usiner (18).

6. Système de type soudage (100) selon la revendication 1, dans lequel le ou les paramètres de processus de soudage sont un taux de variation du courant d'arc.

7. Système de type soudage (100) selon la revendication 1, dans lequel le ou les paramètres de processus de soudage sont une sortie de puissance provenant de la source d'alimentation de type soudage (10).

8. Système de type soudage (100) selon la revendication 1, dans lequel le commutateur (13) est un dispositif à base de semiconducteur.

9. Système de type soudage (100) selon la revendication 1, dans lequel le commutateur (13) est un dispositif à transistor.

10. Système de type soudage (100) selon la revendication 1, dans lequel le commutateur (13) est un commutateur passif configuré pour s'activer automatiquement pour rediriger le courant d'arc à travers le trajet de courant alternatif.

11. Système de type soudage (100) selon la revendication 1, dans lequel le commutateur (13) est en outre configuré pour ajuster une quantité de courant d'arc circulant à travers le trajet de courant alternatif avant l'événement de dégagement court en réponse à un ou plusieurs paramètres de processus de soudage dépassant une deuxième valeur seuil.

12. Système de type soudage (100) selon la revendication 11, dans lequel la deuxième valeur seuil est l'une parmi une vitesse de changement de tension, une vitesse de changement de puissance, ou une vitesse de changement d'impédance associée au système de type soudage.

13. Système de soudage selon la revendication 12, dans lequel la deuxième valeur seuil correspond à un événement de court-circuit.

14. Système de type soudage (100) comprenant :
une source d'alimentation de type soudage (10) configurée pour générer une puissance de sortie pour un processus de soudage à l'arc ;
un dispositif d'alimentation en fil bidirectionnel (12) pour faire avancer ou rétracter un fil d'électrode (42) jusqu'à ou à partir d'une pièce à usiner (18) ;
un ou plusieurs capteurs (70) configurés pour mesurer un ou plusieurs paramètres de processus de soudage ; et
un dispositif de commande (214) pour générer des signaux de commande sur base du ou des paramètres de processus de soudage, **caractérisé par** :
un commutateur (13) pour fournir un trajet de courant alternatif pour un courant d'arc entre un fil d'électrode et une pièce à usiner, dans lequel le commutateur (13) est configuré pour se fermer pour rediriger l'entièreté ou une partie du courant d'arc à travers le trajet de courant alternatif en réponse à un ou plusieurs paramètres de processus de soudage dépassant une valeur seuil correspondant à un événement de court-circuit,
dans lequel le commutateur (13) est configuré pour se fermer entièrement ou partiellement pour ajuster la quantité de courant d'arc circulant à travers le trajet de courant alternatif sur base des signaux de commande.

15. Système de type soudage (100) selon la revendication 14, dans lequel la valeur seuil est une première valeur seuil correspondant à un événement de court-circuit anticipé, le ou les paramètres de processus de soudage comprenant une tension ou une impédance associée au processus de soudage à l'arc.

16. Système de type soudage (100) selon la revendication 14, dans lequel la valeur seuil est une deuxième valeur seuil correspondant à un événement de court-circuit anticipé, le ou les paramètres de processus de soudage comprenant une durée d'événement d'arc mesurée dépassant une durée représentative d'un ou plusieurs événements d'arc.

17. Système de type soudage (100) selon la revendication 14, dans lequel la valeur seuil est une troisième valeur seuil correspondant à un événement de court-circuit détecté, le ou les paramètres de processus de soudage comprenant une tension ou un taux de variation du courant d'arc.

18. Système de type soudage (100) selon la revendication 14, dans lequel le circuit de commande (214) est en outre configuré pour :
recevoir des données correspondant au ou aux paramètres de processus de soudage ;
comparer les données à une pluralité de valeurs de seuil associant des paramètres de processus de soudage à des événements de court-circuit anticipés ou des événements de court-circuit détectés ; et
identifier un événement de court-circuit anticipé ou une occurrence d'un événement de court-circuit sur base du ou des paramètres de processus de soudage.

19. Système de type soudage (100) selon la revendication 14, dans lequel le système de type soudage (100) est configuré pour effectuer des opérations de fabrication additives.
